(19) **Europäisches Patentamt**

**European Patent Office**

**Office européen des brevets**

(11) **EP 1 532 831 B1**

(12) **EUROPEAN PATENT SPECIFICATION**

(45) Date of publication and mention
of the grant of the patent:
**04.10.2006 Bulletin 2006/40**

(51) Int Cl.:
**H04Q 7/38** (2006.01)     **H04Q 7/36** (2006.01)

(21) Application number: **03730074.6**

(22) Date of filing: **19.05.2003**

(86) International application number:
**PCT/EP2003/005263**

(87) International publication number:
**WO 2004/019643 (04.03.2004 Gazette 2004/10)**

(54) **AN APPARATUS AND METHOD FOR RESOURCE ALLOCATION IN A COMMUNICATION SYSTEM**

VORRICHTUNG UND VERFAHREN ZUR ZUORDNUNG VON RESSOURCEN IN EINEM
KOMMUNIKATIONSSYSTEM

APPAREIL ET PROCEDE D'ATTRIBUTION DES RESSOURCES DANS UN SYSTEME DE
COMMUNICATION

(84) Designated Contracting States:
**AT BE BG CH CY CZ DE DK EE ES FI FR GR HU
IE IT LI LU MC NL PT RO SE SI SK TR**

(30) Priority: **21.08.2002 GB 0219437**

(43) Date of publication of application:
**25.05.2005 Bulletin 2005/21**

(73) Proprietor: **MOTOROLA, INC.**
**Schaumburg, IL 60196 (US)**

(72) Inventors:
• **CHEUNG, Colleen**
**Swindon, Wiltshire SN5 8QU (GB)**
• **CRANE, Edward**
**Devizes, Wiltshire SN10 1PS (GB)**
• **THOMAS, Howard**
**Cirencester, Gloucestershire GL7 1EJ (GB)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
WO-A-99/57925          US-A- 5 682 601
US-A- 6 091 955         US-A- 6 163 700
US-A- 2002 192 981      US-A1- 2001 029 191

**Description**

The invention relates to an apparatus and method for resource allocation in a communication system and in particular a cellular communication system.

**Background of the Invention**

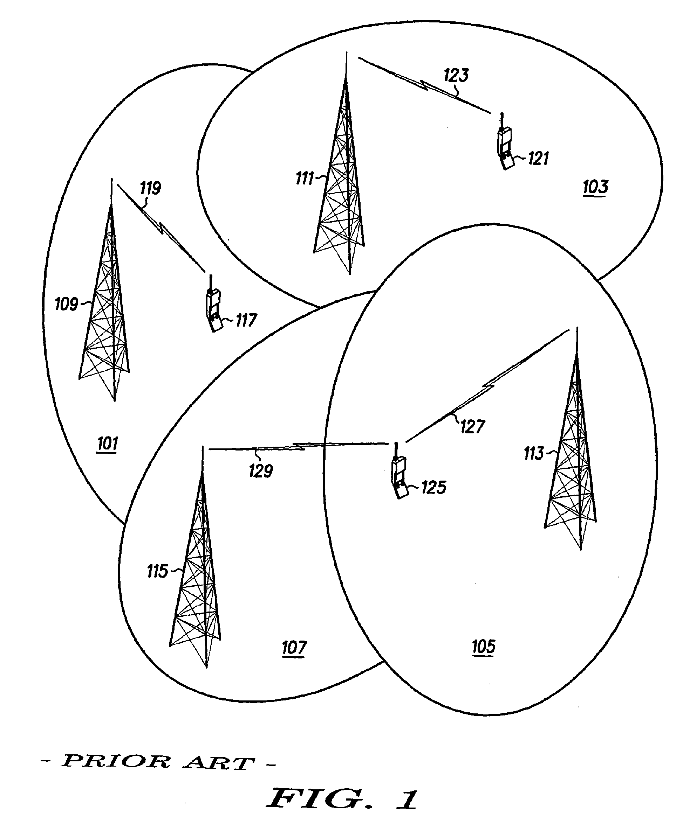

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 101, 103, 105, 107. A mobile station is served via a radio communication link by the base station of the cell within which the mobile station is situated. In the example if FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115 it enters a region of overlapping coverage of the two base stations 111 and 113 and within this overlap region it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundred or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc. The base stations may themselves be considered part of the fixed network

The frequency band allocated for a cellular communication system is typically severely limited, and therefore the resource must be effectively divided between mobile stations. A fundamental property of a cellular communication system is that the resource is divided geographically by division into different cells. Thus a certain amount of resource (for example a frequency band) may at a given time be allocated to a given cell thereby reducing the resource allocation to neighbouring cells. In order to optimise the capacity of a cellular communication system, it is important to minimise the impact of interference caused by or to other mobile stations: An important advantage of a cellular communication system is that due to the radio signal attenuation with distance, the interference caused by communication within one cell is negligible in a cell sufficiently far removed, and therefore the resource can be reused in this cell. In addition, the resource is typically divided within one cell and between cells by division of the resource in the time domain, the frequency domain and/or the code domain. Different communication systems use different principles for this division. The resource allocation may be static or dynamic dependent on the current load of the communication system, and typically a combination of static and dynamic resource allocation is used.

First generation analogue communication systems use a frequency division multiple access (FDMA) system, where the frequency domain is used for dividing the resource between cells. In these systems, the frequency band is divided into narrowband channels of typically 25 kHz bandwidth. A number of these channels are allocated to each base station and upon call setup each mobile station will be allocated a specific narrowband channel for uplink communication and one for downlink communication.

Currently, the most ubiquitous cellular communication system is the 2nd Generation system known as the Global System for Mobile communication (GSM). Similarly to analogue systems, the frequency band is divided into relatively narrow channels of 200 kHz and each base station is allocated one or more of these frequency channels. However, in contrast to the analogue systems, each frequency channel is divided into eight separate time slots allowing up to eight mobile stations to use each frequency channel. This method of sharing the available resource is known as Time Division Multiple Access (TDMA). Further description of the GSM TDMA communication system can be found in 'The GSM System for Mobile Communications' by Michel Mouly and Marie Bernadette Pautet, Bay Foreign Language Books, 1992, ISBN 2950719007.

Another principle of resource distribution is employed in the 2nd generation system known as IS95, as well as in 3rd Generation systems such as the Universal Mobile Telecommunication System (UMTS). These systems divide the frequency into one or few wide band channels, which for UMTS has a bandwidth of 5 MHz. Typically, one wide band frequency channel is used for uplink in all cells and a different wide band frequency channel is used for downlink. In this case, separation between cells is achieved through the use of spread spectrum techniques, where each cell is allocated a cell specific long user spreading code.

In these systems, a signal to be transmitted is multiplied by the spreading code, which has a chip rate typically much larger than the data rate of the signal. Consequently, a narrowband signal is spread over the wideband frequency channel. In the receiver, the received signal is multiplied by the same spreading code thereby causing the original narrowband signal to be regenerated. However, signals from other cells having a different spreading code are not despread by the multiplication in the receiver, and remain wideband signals. The majority of the interference from these signals can consequently be removed by filtering of the despread narrowband signal, which can then be received.

A consequence of the spread spectrum techniques employed is that the amount of the interfering signals, which fall within the bandwidth of the narrowband signal cannot be removed by filtering, and will thus reduce the signal to interference ratio of the received signal. Consequently, it is of the outmost importance that the interference between mobile stations is optimised in order to maximise the capacity of the system. Further description of CDMA and specifically of the Wideband CDMA (WCDMA) mode of UMTS can be found in 'WCDMA for UMTS', Harri Holma (editor), Antti Toskala (Editor), Wiley & Sons, 2001, ISBN 0471486876.

As the use of mobile communication and especially cellular communication systems have increased dramatically in recent years, the demand for resource has increased significantly. Therefore, additional frequency bands have been allocated for cellular communication, such that a plurality of frequency bands is now typically available for mobile stations. For example, many GSM operators now have licenses covering several frequency bands including:

PGSM: The original (Primary) frequency band for GSM covering 890-915 MHz for uplink and 935-960 MHz for downlink.

GSM 1800: Also known as DCS or DCS 1800. This frequency band covers 1710 - 1785 MHz for uplink and 1805 - 1880 for downlink. Many operators have licenses for either the GSM 900 or GSM 1800 frequency band but some operators have licenses covering both frequency bands, or have engaged in mutual agreements with other operators allowing individual networks to use both frequency bands.

EGSM: This is an additional frequency band known as Extended GSM. The frequency band adds the frequency band from 880 to 890 MHz for the uplink and 925 - 935 MHz for the downlink to the PGSM bands.

In the initial GSM specifications, only the GSM 900 frequency band was specified and therefore early GSM mobile stations only have the single capability of using this frequency band. Furthermore, many mobile stations are for cost reasons manufactured to only have the capability for using a subset of the theoretically available frequency bands, although it is become increasingly common for mobiles stations to have the capability of using all or most frequency bands. Thus for a typical cellular communication system, the mobile station population covers a broad range of capabilities, and it is important for the resource management to optimise the resource allocation for the given mobile station capability distribution.

Another method which has been used to increase the capacity of cellular communication systems is the use of hierarchical cells. In this way, smaller cells, known as micro cells or picocells, are located within larger cells, known as macro cells. The micro- and picocells have much smaller coverage thereby allowing a much closer reuse of frequencies. Frequently the macro cells is used to provide coverage over a large area and micro cells and picocells are used to provide additional capacity in densely populated areas and hotspots. However, in order to optimise the capacity of the communication system, it is important that the resource allocation between different cells is optimised. The resource allocation thus becomes a highly critical and complicated process, especially for systems having a plurality of frequency bands with all or some bands having hierarchical cells

Further, many operators have acquired licenses for 3rd generation cellular communication systems such as UMTS. These systems will typically be deployed as islands of coverage wherein coverage is limited to smaller typically separated regions. Service in-between these regions will be provided by 2nd generation systems such as UMTS and it is therefore intended that most 3rd generation mobile stations will be dual mode mobile stations operable on both the 2nd and 3rd generation communication system. Thus in these systems, resource allocation must further be carefully managed between frequency bands of the different communication systems.

Examples of resource management in communication systems can be found in Patent Cooperation Treaty Patent Application WO 99/57925 which describes a system for choosing wireless communication resources among competing users and United States of America Patent Application US 2002/0192981 which describes the dynamic allocation of resources between a base station and associated mobile stations.

It is clear that resource management is becoming increasingly critical and complex, and that it is important for the resource allocation to be managed as optimally as possible in order to maximise the capacity of the communication system and provide the best service to the user. Therefore a large number of resource allocation algorithms and specifically handover algorithms have been developed. However, these algorithms tend to not consider the resource allocation or handovers between different frequency bands or systems, or to use a very simple decision criterion. Specifically, as all GSM mobile stations tends to have PGSM capability whereas only a subset historically have had the capability to use other frequency bands, a simple criterion has been used wherein all multi-band capable mobile stations are handed over to the new frequency bands. For example, in a combined PGSM and GSM 1800 system all dual band mobiles are handed over to GSM 1800 when a GSM 1800 base station is available for the mobile station.

However, this very simple approach is highly inflexible and in many situations do not result in optimal resource utilisation. For example, the transmit power required for a dual band mobile station may be significantly higher on GSM 1900 than on PGSM thereby resulting in significantly increased interference. Consequently, the current methods result in reduced capacity of the communication system as well as degraded service to the user. Hence, an improved system for resource allocation would be advantageous.

## Summary of the Invention

Accordingly the Invention seeks to provide an improved system of resource allocation. Preferably the invention seeks to alleviate or mitigate one or more of the above mentioned disadvantages and in particular to provide a more flexible and/or efficient system for resource allocation.

Accordingly there is provided, a method of resource allocation in accordance with claim 1.

Thus the invention tends to provide one or more of the following advantages singly or in combination.

A significantly more efficient resource distribution can be obtained by a very simple process resulting in increased quality of service. A very flexible resource distribution and allocation is achievable which furthermore can be dynamically adjusted and adapted to meet current conditions. A significant increase in capacity of the communication system is possible.

According to a feature of the invention, the stochastic value is a weighted value, weighted in response to the distribution profile. This provides for a low complexity and cost efficient implementation.

According to another feature of the invention, a plurality of the resource categories corresponds to different frequency bands. Accordingly, the method provides a simple yet efficient method for distributing resource over different frequency bands.

According to one feature of the invention a plurality of the resource categories correspond to different communication systems. Accordingly, the method provides a simple yet efficient method for distributing resource between different communication systems.

According to a different feature of the invention, the distribution profile is determined in response to a preference value for each of the plurality of resource categories. Hence, the resource distribution can easily be adapted to a preferred distribution between the different resource categories.

According to another feature of the invention, each resource category has an associated frequency band and the distribution profile is in response to a preferred frequency band. Thus the resource distribution can be adapted by simple means to meet a preferred distribution across frequency bands of the communication system.

According to a different feature of the invention the step of allocating a resource comprises the step of mapping between the stochastic value and at least one of the resource categories. This provides for a simple yet efficient implementation of the invention.

According to one feature of the invention, the plurality of the resource categories is radio resource categories. Hence, the method may be particularly advantageous for managing radio resources.

An efficient method of managing resource in a cellular communication system is provided whereby capacity and/or quality of service to the user may be increased.

According to a different feature of the invention the communication element is a subscriber unit. Hence, particularly the resource usage of the subscriber units in a cellular communication system can be managed in a simple yet efficient way.

According to one feature of the invention the distribution profile is determined in response to a distribution of capabilities of subscriber unit in the cellular communication system. Hence, the method may provide for efficient and accurate adaptation to a distribution of subscriber units. Specifically, the distribution profile may be dynamically updated to meet variations, changes and /or developments in capabilities of subscriber units.

According to another feature of the invention, a plurality of the resource categories corresponds to different hierarchical layers of the cellular communication system. Thus resource distribution can be optimised for hierarchical architectures of the cellular communication system.

According to a different feature of the invention the distribution profile is determined in response to a distribution of cell loading. This provides for the current cell loading conditions to be taken into account. Accordingly, a fast and efficient resource distribution may be accomplished from the current resource distribution.

The resource distribution may be optimised for a large subscriber unit population while allowing suitable handover candidates for each individual subscriber unit to be identified.

According to another feature of the invention, the method further comprises the step of a subscriber unit handing over to utilise the allocated resource. This provides for an efficient way of controlling resource distribution by moving subscriber units to preferred resource categories.

According to a different feature of the invention a time interval of preference for each resource category is set in response to the distribution profile, and the step of allocating a resource is further in response to the time intervals. This provides a very simple method of controlling the resource distribution requiring only infrequent modifications to the handover operation.

According to one feature of the invention, the step of allocating a resource comprises determining a preferred resource category. Hence, the method provides for a simple method of biasing resource towards a preferred resource category.

According to another feature of the invention, the step of allocating the resource comprises modifying at least one handover parameter depending on the preferred resource category. A simple handover method is thus provided wherein a bias can be introduced to direct the resource distribution towards a preferred resource distribution.

According to a different aspect of the invention, there is provided an apparatus for resource allocation in accordance with claim 17.

## Brief Description of the Drawings

An embodiment of the invention will be described, by way of example only, with reference to the drawings, in which

FIG. 1 is an illustration of a cellular communication system in accordance with the prior art;

FIG. 2 is a simplified illustration of a GSM communication system architecture;

FIG. 3 is an illustration of an example of a ranking of handover candidates in accordance with an embodiment of the invention;

FIG. 4 is an illustration of elements of a handover control subsystem in accordance with an embodiment of the invention;

FIG. 5 is an illustration of a flow chart for a method of resource allocation in accordance with an embodiment of the invention; and

FIG. 6 illustrates a reordering of the handover candidate list of FIG. 3 according to one embodiment of the invention.

## Detailed Description of a Preferred Embodiment of the Invention

In the following, a preferred embodiment of the invention is described mainly with reference to a GSM cellular communications system. However, it will be apparent that the invention is applicable to many other communication systems including for example 3$^{rd}$ Generation cellular communication systems.

In a cellular communication system, the fixed infrastructure typically comprises complex functionality for managing the resource allocation, and specifically for managing handovers of subscriber units. A subscriber unit may typically be a wireless user equipment, a mobile station, a communication terminal, a personal digital assistant, a laptop computer, an embedded communication processor or any communication element communicating over the air interface.

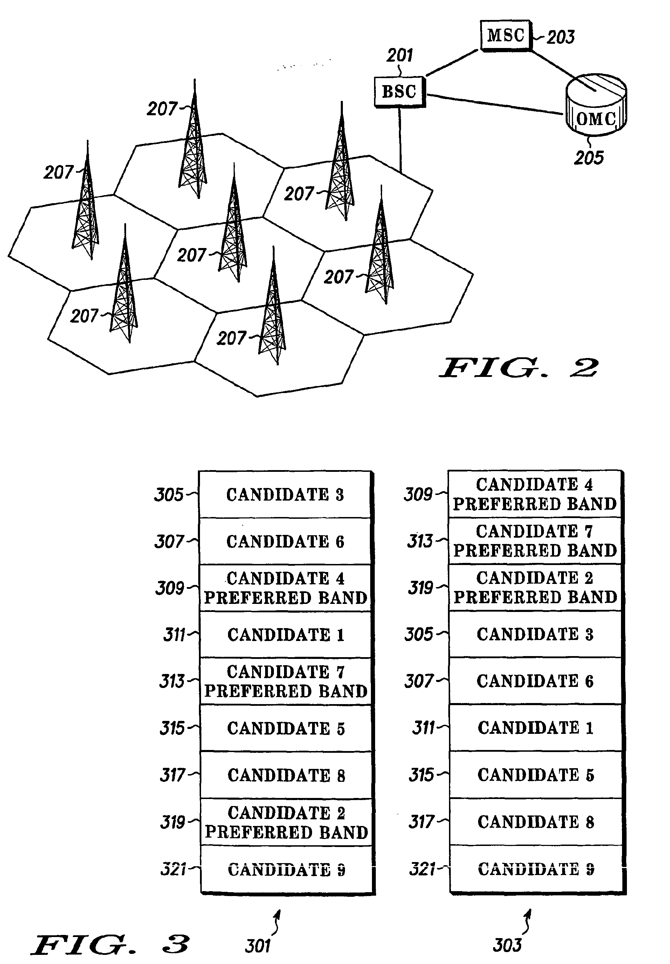

FiG. 2 is a simplified illustration of a GSM communication system architecture. In a typical GSM cellular communication system, a large number of Base Station Controllers (BSCs) 201 (one shown) are connected to a Master Switch Centre (MSC) 203. The MSC is the central switch centre and switches communication between different BSCs such that subscriber units connected to one BSC can communicate with subscriber units associated with other BSCs. In addition, the MSC is responsible for interfacing with other networks, performing authentication, some mobility management etc. The MSC 203 and typically the BSC 201 is connected to an Operations and Maintenance Centre (OMC) 205 which is where the operation and performance of the network is monitored and controlled by the network operator. Typically, various operational parameters can be set at the OMC and communicated to other network elements, such as the BSCs. In this way, the network operation can be managed from the OMC 205. The BSC is connected to a number of Base Station Transceivers (BTSs) 207 which are responsible for communicating with the subscriber units in the associated cell over the air interface.

Typically the handover control functionality is distributed between the functionality of a BSC and the associated BTSs. Thus in the preferred embodiment, the cellular communication system comprises a handover control subsystem distributed between a BSC and BTS. In addition, the communication system comprises a subsystem for setting up the physical channels for specific logical channels, handling the initial system configuration and updateable configuration changes etc.

The handover control subsystem for example recognises when radio conditions are such that a handover is required, processes measurement report information and collects/provides channel interference level measurements. The data from these measurements are stored in databases that also store parameters which control the timing of the measurement averaging process. These are used to perform the desired measurement averaging processes. The handover control process also maps measurements pertaining to the neighbour frequencies received from the subscriber unit to the frequency of the neighbour cells. As neighbour cell information and network changes occur, the appropriate changes are made to the relevant databases. The handover control subsystem may determine that a handover is required for other reasons than based on subscriber unit measurements. These reasons may include the loading of different cells, timing advances etc.

The handover control subsystem further comprises a handover evaluator subsystem, which evaluates handover candidates in response to a determination that a handover is required. The determination of the requirement for a handover includes determining a list of candidate cells. The handover evaluator subsystem is responsible for re-ordering the handover candidate list in order to choose the best candidate handover cell. If the handover is internal (i.e. to a BTS under the control of the same BSC as the current serving BTS), the handover control subsystem processes the handover itself. Otherwise, if the handover is external, the handover evaluation subsystem sends a handover required message to the fixed network. This message includes information related to the chosen candidate cells and is forwarded to the target BTS.

The handover control subsystem further comprises a call resource manager, which is responsible for choosing radio resources based on cell loading and channel interference levels. It also queues requests for radio resources, selects connection numbers, dynamically changes traffic channel configurations, tracks data on idle channel interference levels and reports the levels for resource indications. Additionally, the handover control subsystem chooses the channel speech rate and speech version depending on MSC preference, operator preference and available resources.

As mentioned previously, the handover control subsystem is responsible for monitoring measurement reports from the subscriber unit during a call. A GSM subscriber unit is capable of monitoring up to 64 neighbours. The subscriber unit transmits information to the handover control subsystem related to the signal level at which the subscriber unit receives the pilot signal of the neighbours receive level. In addition it transmits information related to the decoding of the base station identity of the neighbours, the serving cell's receive level, receive quality, timing advance, power level, whether discontinuous transmission is enabled and which neighbour list is use for the measurements.

At the handover control subsystem, the measurements are subject to averaging, and database parameters specify the number of measurements to be used in the average process. The handover control subsystem then makes decisions on handovers, power level changes and timing advance changes using the parameters measured by the subscriber units. Handover triggers are typically based on the following criteria, in order of priority:

Receive Quality (Uplink)
Receive Quality (Downlink)
Interference level (Uplink and Downlink)
Receive Signal Strength (Uplink)
Receive Signal Strength (Downlink)
Distance (Timing Advance)
Power Budget (PBGT)

During a call, a handover may become necessary for any of the above listed reasons. In the preferred embodiment, the communication system utilises a plurality of frequency bands and the frequency bands to which a subscriber unit is allowed to handover are set in a database of the handover control subsystem. The determination of which cell to handover to is usually based on a power budget algorithm. An example of a power budget algorithm is :

$$PBGT_{(n)} = \text{Neighbour Cell Received Signal Power} - \text{Serving Cell Received Signal Power}$$

$$= neighbour\_rxlev\_dl_{(n)} - [server\_rxlev\_dl + PWR\_C\_D]$$

where

- *server_rxlev_dl* and *neighbour_rxlev_dl$_{(n)}$* are the signal levels of the traffic signal of serving cell and the pilot signal of the current neighbour cell measured by the subscriber unit respectively.
- *PWR_C_D* is a correction factor for the serving cell corresponding to the power level difference between the measured traffic signals and the full power pilot signal.

Conventionally, a handover is made to the neighbour cell having the highest power budget.

At present, 80-90% of the current worldwide GSM subscribers fall into the slow moving and stationary category. Deploying hierarchical, or layered, networks mean greater spectrum efficiency, coverage and capacity can be provided. However, introduction of a layered structure requires careful resource management and therefore the existing handover algorithms have been changed by customisation of the power budget calculations. A number of different power budget algorithms are typically used simultaneously in hierarchical system. One specific example of a conventional handover algorithm is a handover algorithm wherein handovers from a micro cell is only allowed to a macro cell if this is imperative. Hence, the normal power budget algorithm is executed for neighbour micro cells, and the subscriber unit is handed over to the micro cells having the best power budget. Macro cells are only considered if no micro cells provide acceptable quality. If no acceptable micro cells is determined, the power budget algorithm is thus performed for the neighbour macro cells and the subscriber unit is handed over to the target cell thereby identified.

Hence, in order to optimise the performance and service of a cellular communication system, it is important to have a handover control subsystem which effectively manages the resource distribution of all the resource categories available. The efficacy of the handover algorithms in terms of resource management depends on the distribution of traffic within the frequencies in an operator's network and the particular capabilities of subscriber units within that network. For example, in a dual-band (e.g. PGSM / GSM1800) network, only a small subset of subscriber units historically have had the capability of using the GSM 1800 frequency bands, and handover algorithms have therefore handed all GSM 1800 capable subscriber units over to these bands if possible. However presently most subscriber units are capable of operating in both bands, and therefore this algorithm results in an asymmetric resource load as the majority of subscriber units are handed over to GSM 1800. This results in increased interference and thus reduced quality of service and capacity of the communication system. In, for example, a PGSM /EGSM / DCS1800 network, or a GSM-GPRS-UMTS network, the situation becomes even more complicated, and it is clear that more sophisticated algorithms are required.

Most currently used handover algorithms were designed with no more than two frequency bands in mind, and at the time of the design of the algorithms, most subscriber units were mainly capable of operating on one frequency band only (i.e. PGSM). Subscriber unit capabilities have improved greatly in the meantime, however, and now there is a varied distribution of subscriber unit capabilities in today's networks. Moreover, some networks now have multiple technologies (GSM, GPRS, UMTS, CDMA2000, IS95, IS136) and frequency bands (PGSM, EGSM, GSM1800, PCS1900) deployed. In accordance with the preferred embodiment, a more flexible system for handovers are provided resulting in increased capacity and improved quality of service with less dropped calls.

In accordance with the preferred embodiment, the handover control subsystem determines a suitable handover candidate based on the measurements by the subscriber unit. Specifically, in order for a neighbour cell to be considered as a valid handover target, it must meet a criterion indicating that acceptable performance can be achieved for the neighbour cell. Thus the criterion ensures that the subscriber unit receives the potential handover target at a power level sufficient for the BTS of that cell to support a good call. A neighbour cell is considered valid to be entered on the list of potential candidates, if the receive level at the subscriber unit for this cell is above a threshold RXLEV_MIN(n) which can be set in the handover control database.

$$\text{Criterion 1:} \qquad rxlev\_ncell_{(n)} > rxlev\_min_{(n)}$$

where

$rxlev\_ncell$ is the latest averaged received signal strength processed for that neighbour and $rxlev\_min_{(n)}$ is a database defined threshold.

In accordance with the preferred embodiment, the handover candidates which meet Criterion 1 are ordered in a ranked list of potential handover candidates. Conventionally, the handover candidates are ordered according to the power budget and handover is instigated to the neighbour cell having the highest power budget. However, in the preferred embodiment the ordering of the handover candidates further takes into account a preference for which category of resource is used. Thus in the preferred embodiment a plurality of categories of resource are designated. These categories may for example correspond to the different frequency bands available combined with the different layers of the hierarchical cell structure. Thus the categories in a dual band hierarchical layer may for example be:

|  |  |
|---|---|
| Category 1: | PGSM Micro Layer |
| Category 2: | PGSM Macro Layer |
| Category 3: | GSM 1800 Micro Layer |
| Category 4: | GSM 1800 Macro Layer |

In other embodiments, the different categories may be limited to the available frequency bands. In this embodiment, conventional algorithms for selecting between micro cellss and macro cellss within each frequency band may be used. In other embodiments, the categories may include other available resources including other interworking communication systems such as UMTS or other 3rd Generation systems.

In the preferred embodiment, the ordering of the handover candidates is performed in response to a resource category preference. In the simplest embodiment, the ordering of the handover candidates is such that all handover candidates of the preferred category are ranked highest and thus at the top of the list. This approach is illustrated in FIG. 3 which is an illustration of an example of a ranking of handover candidates.

FIG. 3 shows a first list 301 corresponding to a ranking of the handover candidates 305 - 321 by the handover control subsystem according to the power budget. As can be seen, candidate 3 305 has the best power budget followed by candidate 6 307 and candidate 4 309. Thus, conventionally a handover would be instigated to handover candidate 3 305. However, in accordance with the preferred embodiment, the handover candidate list is reordered taken into account the preference of the various resource categories. In the example, the resource categories simply consist in different frequency bands. One of these frequency bands is a preferred frequency band, for example it may be preferred to hand over as many subscriber units to GSM 1800 as possible. Thus, the handover candidate list is reordered such that all handover candidates of the preferred frequency band are moved to the top, i.e. are ranked highest. FIG. 3 illustrates the reordered list 303 wherein candidate 4 309 is ranked highest as it is the handover candidate of the preferred band having the highest power budget. This is followed by candidates 7 313 and 2 319 which also use the preferred band. Candidate 3 305 is now ranked as the fourth best candidate. Hence, following the reordering, a handover is instigated to candidate 4 rather than candidate 3.

In accordance with the preferred embodiment, the resource is allocated by determining a distribution profile for a plurality of resource categories, determining a stochastic value for a communication element of the communication system and allocating a resource from one of the plurality of resource categories in response to the stochastic value and the stochastic distribution profile. Specifically the communication element is in the preferred embodiment a subscriber unit and the resource categories mainly comprise radio resource categories.

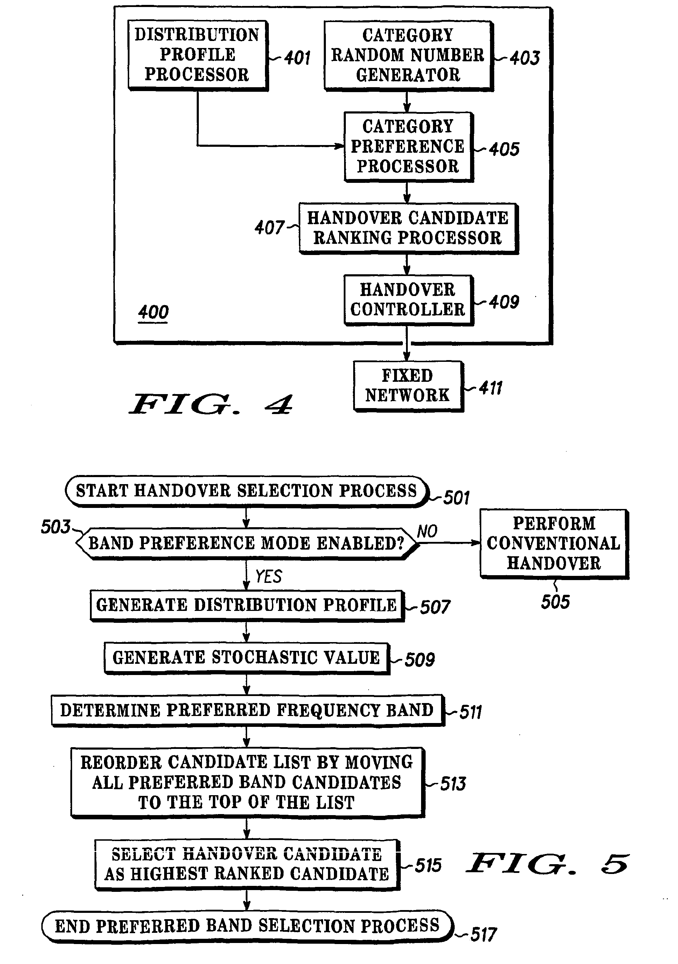

FIG. 4 is an illustration of elements of a handover control subsystem 400 in accordance with an embodiment of the invention.

The handover control subsystem 400 comprises a distribution profile processor 401 which determines a suitable distribution of the communication elements, such as the subscriber units, across the different resource categories, such as the different frequency bands. For example, the distribution profile processor 401 may determine that in a communication system comprising two resource categories corresponding to two different frequency bands, the subscriber units should be distributed equally. Thus the determined distribution profile is 50% for each category. In some embodiments, the distribution profile is not determined in terms of distribution of subscriber units but in terms of distribution of resource. This is particularly advantageous in systems where the resource requirements vary significantly between subscriber units.

The handover control subsystem 400 further comprises a generator for determining a stochastic value for a communication element. In the preferred embodiment, the generator is a random number generator 403, which generates a random number for a subscriber unit seeking to hand over to a neighbour cell. The random number generator 403 and the distribution profile processor 401 are connected to a category preference processor 405, which based on the random number and distribution profile determines a preferred resource category.

In a simple embodiment, a mapping is used between the stochastic value and at least one of the resource categories. For example, in the preferred embodiment, the range of possible values of the random numbers is divided into intervals corresponding to each of the resource categories. The size of the interval is chosen to correspond to the probability of the associated category being used. Thus, if a random number generator generates a uniformly distributed number between 0 and 100 and the probability of a first frequency band being used is 30% and the probability of a second frequency band being used is 70%, the intervals are set such that the interval of the first frequency band is from 0 to 29 and the interval of the second frequency band is from 30 to 100.

The category preference processor 405 is connected to a handover candidate ranking processor 407 which ranks the handover candidate list in response to the power budget for the different neighbour cells as modified by consideration of the selected preferred resource category.

Specifically, in the preferred embodiment, the power budget handover candidate list is reordered such that the neighbours corresponding to the preferred resource category are ranked at the top of the list as illustrated for a specific example in FIG. 3.

The handover candidate ranking processor 407 is connected to a handover controller 409 which selects a handover candidate in response to the reordered handover candidate list. Typically, a handover is instigated to the highest ranked handover candidate. However, if this handover cannot be performed for some reason, for example because the base station of the handover candidate is overloaded and therefore rejects a handover request, the handover controller 409 proceeds to instigate a handover to the next candidate in the list.

The handover controller 409 is in FIG. 4 shown connected to the remaining part of the fixed network for controlling the handover. However, it will be apparent that the handover control subsystem 400 can be implemented in any suitable form and location, and in the preferred embodiment the handover control subsystem forms part of the fixed network and is specifically distributed between the BSC and the BTS supporting the serving cell.

In another embodiment, the distribution profile processor 401 is connected to the random number generator 403 which is connected to the category preference processor 405. In this embodiment, the stochastic value is a weighted value weighted in response to the distribution profile. Specifically, the mapping employed by the category preference processor 405 is fixed, such that for example any random number below 50 will result in a first frequency band being chosen as the preferred frequency band, and any random number between 50 and 100 will result in a second frequency band being chosen as the preferred band. However, in this case the random number generator 403 does not generate a uniform number, but rather generates a random number which is distributed so as to reflect the distribution profile. For example, if the distribution profile prescribes 30% probability of the first frequency band being chosen and a 70% probability that the second frequency band is chosen, the random number generator 403 comprises a weighting such that 30% of the generated numbers are between 0 and 50, and 70% of the numbers are between 50 and a 100.

Thus in accordance with the described embodiment, the handover decision and selection is determined by a stochastic preference method, as specified by programmable weightings or biases for each resource category. For example, a preferred resource category is selected by stochastic probabilities depending on e.g. the frequency band to be preferred at a particular instant. As a specific example, if there are three frequency bands in the network, the probability that PGSM is preferred could be set to 20%, the EGSM probability to 40%, and the DCS1800 probability to 40%, assuming that there is a slightly higher proportion of PGSM-capable subscriber units than subscriber units capable of operating in the other two frequencies. This allows the more bias for the latter two frequency bands, whereby subscriber units that have the capability to handover to those bands will be more likely to do so, leaving those that cannot on the PGSM band. Hence such a setting may result in an even distribution of subscriber units on the three frequency bands. Thus, the distribution profile is not necessarily set corresponding to the desired distribution of subscriber units but may be set such that the resource allocation will result in a desired distribution of subscriber units.

Furthermore, the distribution profile may typically be dynamically updated in response to the operating conditions of the communication system. For example, if the current operating conditions have too high a proportion on a first frequency band, the probability for this frequency band may be set very low until a more even distribution has been reached, at which time the probability is raised again.

FIG. 5 is an illustration of a flow chart 500 for method of resource allocation in accordance with an embodiment of the invention.

In step 501, the handover process is started. Any suitable method for detecting that a handover is required may be used including detecting that the quality of the current link is insufficient. Additionally and or alternatively, the method may continually be performed, and if a handover candidate meets a certain set of conditions, a handover may be instigated. These conditions may for example include that the power budget for a neighbour cell exceeds a given threshold or that neighbour cells are available on the determined preferred band. Hence, the method in accordance with the described embodiment may itself trigger a handover.

In step 503, it is determined if the handover method should include consideration of a preferred resource category. Specifically, it is determined if the configuration database for the handover control subsystem has a parameter set such that the band preference mode should be used. If not, the method continues in step 505 by performing a handover evaluation and selection in accordance with conventional handover methods.

If the band preference mode has been set, the method continues in step 507 wherein a distribution profile is generated. The distribution profile is preferably a desired handover distribution profile for subscriber units, and is preferably such that this handover distribution will result in the desired resource distribution across the desired resource categories.

In step 509, a stochastic value is generated. Preferably the stochastic value is a random number. The method then proceeds in step 511 wherein a preferred resource category, such as a preferred frequency band, is determined. The preferred category is determined in response to the stochastic value and the distribution profile, and preferably such that a desired handover probability to each of the resource categories is achieved. In the preferred embodiment, a preferred band is selected to meet the probabilities derived from the distribution profile.

In step 513, the handover candidate list is reordered such that the handover candidates corresponding to the preferred resource category are ranked highest. In step 515, the handover candidate which has been rated highest is selected as the handover candidate. The method terminates in step 517 by the appropriate handover being instigated.

Hence, in accordance with the preferred embodiment of the invention, it is possible for a network operator to control the probability that subscriber units are handed over to specific resource categories. This will ensure that traffic is directed towards all available resources, such that the resource distribution can be controlled and levelled over all resource categories. This provides for a very flexible system wherein the overall resource distribution in a network can be managed by a very simple process requiring only very few control inputs. The settings can easily be updated and the resource distribution can thus easily be dynamically updated and adapted to the changing operating conditions. Furthermore, the system can flexibly be updated and customised for the current level of resource categories. Thus, it provides flexibility to extend the stochastic probabilities based on the actual frequency bands and layers and technologies that are deployed in an operator's network. Specifically, the handover algorithm need not only involve frequency bands such as PGSM, EGSM and DCS1800 bands, but can also be extended to take into account other categories such as PCS1900, CDMA2000, IS95, IS136, GPRS, UMTS and GSM for macro and micro layers.

The described stochastic algorithm using an assignment of probabilities of handing over to a layer or cell, based on the distribution profile and the values of the handover parameters thus provides a biasing for a resource category (or away from a resource category). The algorithm is easy to implement, and may be implemented without the requirement of traffic load information on other layers.

For example, in accordance with the preferred embodiment, there is no need to set a permanent preferred band to achieve a given resource distribution. Rather the stochastic probabilities for using the different bands can be set. For example, if these are set to 33.33% PGSM, 33.33% EGSM and 33.33% DCS1800, the traffic distribution is evenly distributed over all bands. However, this may result in the PGSM band in the macro layer being less loaded than the other two bands in the macro layer if a micro layer PGSM band also exists in the network. In this case, when PGSM is selected as the preferred band of the moment, subscriber units will tend to go to the micro layer PGSM band, with any overflows served by the macro layer PGSM band. However, this situation can easily be managed simply by modifying the distribution profile. Thus setting the probabilities to reflect the presence of a micro cell layer will result in for example the probabilities being set as PGSM 46%, EGSM 27% and DCS1800 27%. With these settings, the traffic distribution is even throughout all the frequency bands in the macro layer, with full utilisation in the micro layer. Hence, full utilisation of the micro cells is achieved without use of specific micro cellular algorithms.

The distribution profile may be fixed or set semi-permanently. For example, it may be set to reflect the resource categories available and a preferred distribution between these. However, preferably the distribution profile is dynamically updated, and additionally or alternatively depends on one or more parameters associated with the configuration and/or the operating conditions of the communication system.

Thus preferably the distribution profile is determined in response to a distribution of capabilities of user equipment in the cellular communication system. Hence, in some embodiments, the capabilities of the subscriber units are taken into account, and specifically the subscriber unit capabilities for using the different resource categories are taken into account.

Hence, in one embodiment the distribution of subscriber unit capabilities in the network is taken into account when setting the probabilities. This allows for efficient resource distribution in a non-homogenous communication system with a large and changing variation in the capabilities of subscriber units to use various resource categories. For example, the traffic distribution can still be evenly spread out over all available bands even if only some of the subscriber units are GSM1800-capable, while all subscriber units are PGSM- and EGSM-capable. If for example 50% of subscriber units are GSM 1800-capable, while all the subscriber units are PGSM- and EGSM-capable, and additionally a PGSM micro layer is present, the probabilities for the distribution profile are set to PGSM 25%, EGSM 10% and finally DCS1800 65%. This results in the traffic being distributed evenly over all bands in the macro layer, with the micro cells being fully utilised. Hence, a very efficient resource utilisation is achieved with the loading in each macro cell being evened out resulting in reduced interference and thus increased capacity.

In some embodiments, the network deployment strategy is taken into account and specifically the layer structure of macro cells, micro cells and pico cells are used to determine the distribution profile such that a desired resource distribution is achieved. Hence a plurality of the resource categories may correspond to different hierarchical layers of the cellular communication system. In this way, it is possible achieve a desired distribution in the loading of the various layers by a very simple control method. Further, this loading can be controlled across the hierarchical layers of the different frequency bands.

In some embodiments, the distribution profile may be determined in response to a distribution of cell loading. For example, the loading of the communication system may be continuously monitored and controlled. Hence, if it is determined that cells of one resource category are heavily loaded, whereas cells of other resource categories are not heavily loaded, the distribution profile is changed to further bias the lightly loaded resource categories. Thus if GSM 1800 cells are heavily loaded whereas GSM 900 cells are not, the probability for the GSM 900 band to be selected as the preferred band is increased.

In some embodiments, at least one of the resource categories corresponds to a different communication system. Thus not only may the handover take into account resource categories corresponding to e.g. different frequency bands but all available resource categories are included. Currently, many GSM operators are deploying 3rd Generation systems cooperating with the GSM system. Specifically, 3rd Generation subscriber units are typically capable of handing over between 2nd and 3rd Generation communication systems, such as between GSM and UMTS. Hence, in these scenarios, the distribution profile is preferably concerned with resource categories of both communication systems. Additionally, it is within the contemplation of the invention that it is applicable to communication systems having a plurality of sub-communication systems. Specifically, 2nd and 3rd Generation communication systems may be seen as individual sub-communication systems of the same communication system.

The handover selection in accordance with the distribution profile need not be determined for each individual handover event. Rather, in one embodiment, the preferred resource category is fixedly set for each resource category for a given time interval. In this embodiment, a time interval of preference for each resource category is set in response to the distribution profile, and the allocation of a resource is in response to the time intervals. In this embodiment, no specific random value or number is generated but rather the stochastic value is determined in response to the time of the handover request (or may indeed be the time of the handover request or trigger). Hence, depending on the time of the handover request, a preferred resource category is selected. As the handover times are stochastic in a network due to the complex and chaotic nature of the radio conditions, the desired stochastic distribution will be achieved.

Hence, as a specific example a first frequency band may be set as the preferred band for a specified time, e.g. 5 minutes. At the end of the interval, a second frequency band is set as the preferred band for a specified time. By varying the interval lengths the desired handover distribution can be obtained. If, for example, the second interval is also 5 minutes an even distribution is obtained, but if it is set to 10 minutes a strong bias towards the second frequency band is achieved.

In another embodiment, the time interval is fixed, e.g. 5 minutes, but at the end of each fixed time interval, the new frequency band is chosen in response to the probability distribution and the stochastic value. Hence, in this embodiment the stochastic value is not generated just for one subscriber unit specifically but rather the same stochastic value is used for all subscriber units attempting to handover during that time interval. In this embodiment, the required resource distribution is achieved by the frequency at which each frequency band is selected as the preferred frequency band.

In some embodiments the allocation of the resource comprises modifying at least one handover parameter depending on the preferred resource category. Specifically, in one embodiment, the power budget determined for each handover candidate is modified to reflect the current preferred resource category. Specifically, the power budget is preferably offset by a predetermined amount for all handover candidates of the preferred resource category. For example, the measured power budget may be increased by e.g. 6dB for all neighbour cells which utilise the preferred frequency band.

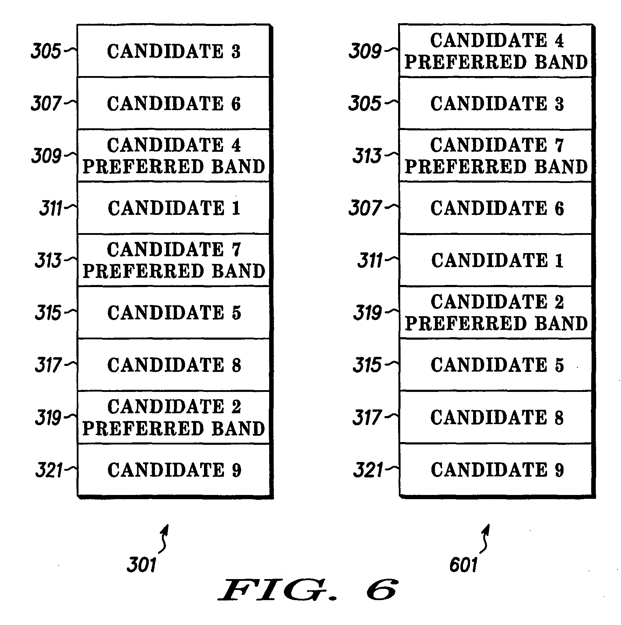

FIG. 6 illustrates a reordering of the handover candidate list of FIG. 3 according to this embodiment of the invention.

The handover list ordered in response to the power budget 301 in this example has candidate 3 ranked highest followed by candidate 6 and 4. However, contrary to the embodiment of FIG. 3, the current embodiment does not move all preferred band candidates to the top of the list. Rather it offsets the power budget of the candidates of the preferred band by a predetermined amount. Thus, the power budget of candidates 4, 7 and 2 are increased by this amount. The candidate handover list is then reordered in response to the offset power budget values to provide a compensated power budget handover candidate list 601. As illustrated in FIG. 6, the compensation of candidate 4 has improved the power budget for this candidate above that of candidates 3 and 6, and candidate 4 is therefore the preferred handover candidate. However, the compensation of candidate 7 has only resulted in that candidate having a better power budget than candidate 6, whereas it is still worse than candidate 3. Therefore, candidate 3 is the second highest ranked handover candidate followed by candidate 7 and candidate 6. Following the reordering, the compensated power budget handover candidate list 601 is then used to instigate the handover.

This embodiment thus provides a more flexible and accurate biasing towards a preferred resource category. Further it ensures that the subscriber unit will not try to target a resource category with bad power budget values when there are better ones available. It provides that when candidate list re-ordering is performed, the results can automatically take into account preferred resource category considerations, micro cell considerations, as well as power budget considerations, all together. It therefore provides that whenever conditions permit, the subscriber units will stay on the micro layer, or if in the macro layer, try to handover to the micro layer as the first option. As FIG. 6 indicates, when the candidates of the preferred resource category have power budget values that are reasonable in relation to the other candidates, the preferred category candidates will tend to be biased towards the top of the list. If, however, the candidates of the preferred resource category have power budget values that are not suitable, another candidate will be the first choice for the handover target. The level of the bias clearly depends on the predetermined value used for the offset.

It will be apparent, that the invention may be implemented in any suitable way and in any suitable location. Specifically, the invention may be implemented in the fixed network and/or the subscriber unit of a cellular communication system.

For a subscriber unit implementation, the invention can, e.g., be implemented in the subscriber unit's cell selection or cell reselection procedure, primarily during idle mode. In this case, the subscriber unit is preferably able to actively decide which frequency to select or attach to. Preferably, in such an implementation, various parameters used to determine a distribution profile, such as the available resource categories, the loading of each cell and the distribution of subscriber unit capabilities are preferably transmitted or broadcast by the fixed network.

The invention can be implemented in any suitable form including hardware, software, firmware or any combination of these. However, preferably, the invention is implemented as computer software running on one or more data processors. The elements and components of an embodiment of the invention may be located in the core network, the radio access network, a subscriber unit or any suitable physical or functional location. Indeed the functionality may be implemented in a single unit, in a plurality of units or as part of other functional units. As such, the invention may be implemented in a single unit or may be physically and functionally distributed in the communication system.

## Claims

1. A method of resource allocation in a cellular communication system, the method **characterized by** the steps of
   determining (507) a distribution profile for a plurality of resource categories;
   determining (509) a stochastic value for a communication element of the communication system; and
   allocating (513, 515) a resource from one of the plurality of resource categories in response to a measured handover parameter for a plurality of cells, the stochastic value, and the distribution profile.

2. A method as claimed in claim 1 wherein the stochastic value is a weighted value weighted in response to the distribution profile.

3. A method as claimed in any of the claims 1 to 2 wherein a plurality of the resource categories correspond to different frequency bands.

4. A method as claimed in any of the claims 1 to 3 wherein a plurality of the resource categories correspond to different communication systems.

5. A method as claimed in any of the claims 1 to 4 wherein the distribution profile is determined in response to a preference value for each of the plurality of resource categories.

6. A method as claimed in claim 5 wherein each resource category has an associated frequency band and the distribution profile is in response to a preferred frequency band.

7. A method as claimed in any previous claims wherein the step of allocating a resource comprises the step of mapping between the stochastic value and at least one of the resource categories.

8. A method as claimed in any of the previous claims wherein the plurality of the resource categories are radio resource categories.

9. A method as claimed in claim 1 wherein the communication element is a subscriber unit.

10. A method as claimed in any of the claims 1 or 9 wherein the distribution profile is determined in response to a distribution of capabilities of subscriber units in the cellular communication system.

11. A method as claimed in any of the claims 1, 9 or 10 wherein a plurality of the resource categories correspond to different hierarchical layers of the cellular communication system.

12. A method as claimed in any of the claims 1, 9, 10 or 11 wherein the distribution profile is determined in response to a distribution of cell loading.

13. A method as claimed in any of the claims 1, 9, 10, 11 or 12 further comprising the step of a subscriber unit handing over to utilise the allocated resource.

**14.** A method as claimed in any previous claim wherein a time interval of preference for each resource category is set in response to the distribution profile, and the step of allocating a resource is further in response to the time intervals.

**15.** A method as claimed in any previous claim wherein the step of allocating a resource comprises determining (511) a preferred resource category.

**16.** A method as claimed in claim 15 wherein the step of allocating the resource comprises modifying at least one handover parameter depending on the preferred resource category.

**17.** An apparatus (400) for resource allocation in a cellular communication system, the method **characterized by**:

a processor (401) for determining a distribution profile for a plurality of resource categories;
a stochastic processor (403) for determining a stochastic value for a communication element of the communication system; and
a resource controller (409) for allocating a resource from one of the plurality of resource categories in response to a measured handover parameter for a plurality of cells, the stochastic value, and the distribution profile.

**Patentansprüche**

**1.** Verfahren zur Ressourcenzuteilung in einem zellularen Kommunikationssystem, wobei das Verfahren durch die Schritte **gekennzeichnet** ist:

Ermitteln (507) eines Verteilungsprofils für eine Mehrzahl von Ressourcenkategorien;
Ermitteln (509) eines stochastischen Werts für ein Kommunikationselement des Kommunikationssystems; und
Zuteilen (513, 515) einer Ressource aus einer von der Mehrzahl von Ressourcenkategorien als Antwort auf einen gemessenen Handoverparameter für eine Mehrzahl von Zellen, den stochastischen Wert und das Verteilungsprofil.

**2.** Verfahren nach Anspruch 1, wobei der stochastische Wert ein als Antwort auf das Verteilungsprofil gewichteter gewichteter Wert ist.

**3.** Verfahren nach einem der Ansprüche 1 bis 2, wobei eine Mehrzahl der Ressourcenkategorien unterschiedlichen Frequenzbändern entspricht.

**4.** Verfahren nach einem der Ansprüche 1 bis 3, wobei eine Mehrzahl der Ressourcenkategorien verschiedenen Kommunikationssystemen entspricht.

**5.** Verfahren nach einem der Ansprüche 1 bis 4, wobei das Verteilungsprofil als Antwort auf einen Präferenzwert für jede von der Mehrzahl von Ressourcenkategorien ermittelt wird.

**6.** Verfahren nach Anspruch 5, wobei jede Ressourcenkategorie ein zugeordnetes Frequenzband aufweist und das Verteilungsprofil als Antwort auf ein bevorzugtes Frequenzband erfolgt.

**7.** Verfahren nach einem der vorangehenden Ansprüche, wobei der Schritt zum Zuteilen einer Ressource den Schritt eines Abbildens zwischen dem stochastischen Wert und zumindest einer der Ressourcenkategorien umfasst.

**8.** Verfahren nach einem der vorangehenden Ansprüche, wobei es sich bei der Mehrzahl der Ressourcenkategorien um Funkressourcenkategorien handelt.

**9.** Verfahren nach Anspruch 1, wobei das Kommunikationselement eine Teilnehmereinheit ist.

**10.** Verfahren nach einem der Ansprüche 1 oder 9, wobei das Verteilungsprofil als Antwort auf eine Verteilung von Fähigkeiten von Teilnehmereinheiten in dem zellularen Kommunikationssystem ermittelt wird.

**11.** Verfahren nach einem der Ansprüche 1, 9 oder 10, wobei eine Mehrzahl der Ressourcenkategorien unterschiedlichen hierarchischen Schichten des zellularen Kommunikationssystems entspricht.

**12.** Verfahren nach einem der Ansprüche 1, 9, 10 oder 11, wobei das Verteilungsprofil als Antwort auf eine Verteilung einer Zellenbelastung ermittelt wird.

**13.** Verfahren nach einem der Ansprüche 1, 9, 10, 11 oder 12, das darüber hinaus den Schritt zu einem Teilnehmereinheithandover umfasst, um die zugeteilte Ressource zu verwenden.

**14.** Verfahren nach einem der vorangehenden Ansprüche, wobei ein Präferenzzeitintervall für jede Ressourcenkategorie als Antwort auf das Verteilungsprofil gesetzt wird und der Schritt zum Zuteilen einer Ressource darüber hinaus als Antwort auf die Zeitintervalle erfolgt.

**15.** Verfahren nach einem der vorangehenden Ansprüche, wobei der Schritt zum Zuteilen einer Ressource ein Ermitteln (511) einer bevorzugten Ressourcenkategorie umfasst.

**16.** Verfahren nach Anspruch 15, wobei der Schritt zum Zuteilen der Ressource ein Modifizieren zumindest eines Handoverparameters, abhängig von der bevorzugten Ressourcenkategorie, umfasst.

**17.** Vorrichtung (400) zur Ressourcenzuteilung in einem zellularen Kommunikationssystem, wobei das Verfahren **gekennzeichnet ist durch**:

einen Prozessor (401) zum Ermitteln eines Verteilungsprofils für eine Mehrzahl von Ressourcenkategorien;
einen stochastischen Prozessor (403) zum Ermitteln eines stochastischen Werts für ein Kommunikationselement des Kommunikationssystems; und
einen Ressourcencontroller (409) zum Zuteilen einer Ressource aus einer von der Mehrzahl von Ressourcenkategorien als Antwort auf einen gemessenen Handoverparameter für eine Mehrzahl von Zellen, den stochastischen Wert und das Verteilungsprofil.

**Revendications**

**1.** Procédé d'attribution des ressources dans un système de communication cellulaire, le procédé étant **caractérisé par** les étapes consistant à :

déterminer (507) un profil de distribution pour une pluralité de catégories de ressources ;
déterminer (509) une valeur stochastique pour un élément de communication du système de communication ; et
attribuer (513, 515) une ressource à partir de la pluralité de catégories de ressources en réponse à un paramètre de transfert intercellulaire mesuré pour une pluralité de cellules, la valeur stochastique et le profil de distribution.

**2.** Procédé selon la revendication 1, dans lequel la valeur stochastique est une valeur pondérée, pondérée en réponse au profil de distribution.

**3.** Procédé selon l'une quelconque des revendications 1 à 2, dans lequel une pluralité des catégories de ressources correspond à différentes bandes de fréquence.

**4.** Procédé selon l'une quelconque des revendications 1 à 3, dans lequel une pluralité des catégories de ressources correspond à différents systèmes de communication.

**5.** Procédé selon l'une quelconque des revendications 1 à 4, dans lequel le profil de distribution est déterminé en réponse à une valeur de préférence pour chacune de la pluralité de catégories de ressources.

**6.** Procédé selon la revendication 5, dans lequel chaque catégorie de ressources a une bande de fréquence associée et le profil de distribution est en réponse à une bande de fréquence préférée.

**7.** Procédé selon l'une quelconque des revendications précédentes, dans lequel l'étape d'attribution d'une ressource comprend l'étape consistant à mettre en correspondance la valeur stochastique et au moins l'une des catégories de ressources.

**8.** Procédé selon l'une quelconque des revendications précédentes, dans lequel la pluralité des catégories de ressources sont des catégories de ressources radio.

9. Procédé selon la revendication 1, dans lequel l'élément de communication est une unité d'abonné.

10. Procédé selon l'une quelconque des revendications 1 ou 9, dans lequel le profil de distribution est déterminé en réponse à une distribution de capacités d'unités d'abonné dans le système de communication cellulaire.

11. Procédé selon l'une quelconque des revendications 1, 9 ou 10, dans lequel une pluralité de catégories de ressources correspond à différentes couches hiérarchiques du système de communication cellulaire.

12. Procédé selon l'une quelconque des revendications 1, 9, 10 ou 11, dans lequel le profil de distribution est déterminé en réponse à une distribution de chargement de cellule.

13. Procédé selon l'une quelconque des revendications 1,9, 10, 11 ou 12, comprenant en outre l'étape consistant pour une unité d'abonné à effectuer un transfert intercellulaire pour utiliser la ressource attribuée.

14. Procédé selon l'une quelconque des revendications précédentes, dans lequel un intervalle de temps de préférence pour chaque catégorie de ressources est établi en réponse au profil de distribution, et l'étape d'attribution d'une ressource est en outre en réponse aux intervalles de temps.

15. Procédé selon l'une quelconque des revendications précédentes, dans lequel l'étape d'attribution d'une ressource comprend la détermination (511) d'une catégorie de ressources préférée.

16. Procédé selon la revendication 15, dans lequel l'étape d'attribution de la ressource comprend la modification d'au moins un paramètre de transfert intercellulaire dépendant de la catégorie de ressources préférée.

17. Appareil (400) pour l'attribution de ressources dans un système de communication cellulaire, l'appareil étant **caractérisé par** :

un processeur (401) destiné à déterminer un profil de distribution pour une pluralité de catégories de ressources ;
un précurseur stochastique (403) destiné à déterminer une valeur stochastique pour un élément de communication du système de communication ; et
une unité de commande de ressource (409) destinée à attribuer une ressource depuis l'une de la pluralité de catégories de ressources en réponse à un paramètre de transfert intercellulaire mesuré pour une pluralité de cellules, la valeur stochastique et le profil de distribution.

EP 1 532 831 B1

- PRIOR ART -

FIG. 1

16

FIG. 2

| | |
|---|---|
| 305 | CANDIDATE 3 |
| 307 | CANDIDATE 6 |
| 309 | CANDIDATE 4 PREFERRED BAND |
| 311 | CANDIDATE 1 |
| 313 | CANDIDATE 7 PREFERRED BAND |
| 315 | CANDIDATE 5 |
| 317 | CANDIDATE 8 |
| 319 | CANDIDATE 2 PREFERRED BAND |
| 321 | CANDIDATE 9 |

| | |
|---|---|
| 309 | CANDIDATE 4 PREFERRED BAND |
| 313 | CANDIDATE 7 PREFERRED BAND |
| 319 | CANDIDATE 2 PREFERRED BAND |
| 305 | CANDIDATE 3 |
| 307 | CANDIDATE 6 |
| 311 | CANDIDATE 1 |
| 315 | CANDIDATE 5 |
| 317 | CANDIDATE 8 |
| 321 | CANDIDATE 9 |

FIG. 3    301    303

**FIG. 4**

**FIG. 5**

| | |
|---|---|
| 305 | CANDIDATE 3 |
| 307 | CANDIDATE 6 |
| 309 | CANDIDATE 4 PREFERRED BAND |
| 311 | CANDIDATE 1 |
| 313 | CANDIDATE 7 PREFERRED BAND |
| 315 | CANDIDATE 5 |
| 317 | CANDIDATE 8 |
| 319 | CANDIDATE 2 PREFERRED BAND |
| 321 | CANDIDATE 9 |

| | |
|---|---|
| 309 | CANDIDATE 4 PREFERRED BAND |
| 305 | CANDIDATE 3 |
| 313 | CANDIDATE 7 PREFERRED BAND |
| 307 | CANDIDATE 6 |
| 311 | CANDIDATE 1 |
| 319 | CANDIDATE 2 PREFERRED BAND |
| 315 | CANDIDATE 5 |
| 317 | CANDIDATE 8 |
| 321 | CANDIDATE 9 |

301

601

*FIG. 6*